# EUROPÄISCHE PATENTSCHRIFT

(11) **EP 2 304 099 B1**
(45) Veröffentlichungstag und Bekanntmachung des Hinweises auf die Patenterteilung: **07.08.2013**
(21) Anmeldenummer: 09761521.5
(22) Anmeldetag: 15.06.2009
(51) Int. Cl.: D21B 1/02, D21B 1/32

(54) **VORRICHTUNG ZUM TRÄNKEN VON FASERMATERIAL MIT EINER FLÜSSIGKEIT**
APPARATUS FOR IMPREGNATING FIBROUS MATERIAL WITH A LIQUID
DISPOSITIF D'IMPRÉGNATION D'UN MATÉRIAU FIBREUX À L'AIDE D'UN LIQUIDE

(30) Priorität: 13.06.2008 DE 102008028350
(43) Veröffentlichungstag der Anmeldung: 06.04.2011
(73) Patentinhaber: Betz, Günter, 4805 Brittnau (CH)
(72) Erfinder: Betz, Günter, 4805 Brittnau (CH)
(74) Vertreter: Dreiss
(86) Internationale Anmeldenummer: PCT/EP2009/004295
(87) Internationale Veröffentlichungsnummer: WO 2009/149958

(56) Entgegenhaltungen:
- EP-B1- 1 051 551
- WO-A1-98/35089
- US-A- 5 496 439

## Beschreibung

Die vorliegende Erfindung betrifft eine Vorrichtung zur Benetzung von Fasermaterial, insbesondere Holz, Holzchips und Altpapier.

Holzchips mit einer Größe von etwa 4 cm x 2cm x 1 cm werden durch die Refinermahlung in ihre Faserbestandteile zerlegt. Dabei entsteht der zur Papierherstellung benötigte TMP-Faserstoff (TMP = thermo-mechanical-pulp). Je höher der Feuchtigkeitsgehalt der Holzchips, desto elastischer, weicher und geschmeidiger sind der Faserverbund innerhalb der Holzchips und die im Holzchip befindlichen Einzelfasern. Da mit zunehmender Länge der Fasern deren Festigkeit zunimmt und solche Fasern zur Herstellung hochwertiger Papiere geeignet sind, wird eine möglichst große Feuchtigkeit und Elastizität der Fasern während der Refinermahlung angestrebt.

Aus der EP-A-1 051 551 ist ein Verfahren zur Benetzung von faserigem Material aus mehrlagig beschichtetem Altpapier, wie zum Beispiel Getränkekarton, bekannt. Bei dem sogenannten Getränkekarton sind beide Seiten des Papiers mit Kunststoff und/oder Aluminium beschichtet.

Aus der US-A-5, 496, 439 sind eine Vorrichtung und ein Verfahren zur Rückgewinnung von Zellulose-Fasern aus Altpapier bekannt. Dabei wird das von einer Flüssigkeit umgebene Altpapier nacheinander einem Unterdruck und einem Überdruck ausgesetzt.

Der Erfindung liegt die Aufgabe zugrunde, Vorrichtungen bereitzustellen, mit deren Hilfe die Benetzung von Holzchips oder Altpapier in Ballenform einfach und effektiv möglich ist.

Dabei wird unter Benetzung nicht nur das Anfeuchten der Holzchips an deren Oberfläche verstanden, sondern das Einbringen von Flüssigkeit, insbesondere Wasser, in dem gesamten Voluten des Holzchips. Dies bedeutet, dass nicht nur die Zwischenräume zwischen den Fasern der Holzchips, sondern auch das Innere der Fasern mit einer Flüssigkeit gefüllt werden.

Diese Aufgabe wird erfindungsgemäß durch eine Vorrichtung mit den Merkmalen des Patentanspruchs 1 gelöst.
Mit Hilfe der erfindungsgemäßen Vorrichtung ist es möglich, Fasermaterial, sei es in Form von Holzchips oder ballenförmigein Altpapier, schnell und effektiv mit einer Flüssigkeit zu benetzen. Dabei wird die Elastizität der Fasern und die Änderung des Volumens der Faserhohlräume aufgrund von wechselnden Drücken ausgenutzt.
Bei der Zellstoffherstellung gilt der Grundsatz: je feuchter die Holzchips, die in den Zellstoffkocher eingeblasen werden, desto höher die Fülldichte und damit die Durchsatzleistung des Zellstoffkochers. Außerdem kann durch den Einsatz der erfindungsgemäßen Vorrichtung deutlich früher mit der Befüllung des Kochers mit Kochlauge begonnen werden, da die Holzchips bein Einpumpen der Kochlauge nicht Aufschwimmen, wenn ihre Feuchtigkeit ausreichend groß ist.
Wird zum Benetzen der Holzchips nach dem erfindungsgemäßen Verfahren heiße Kochlauge verwendet, wird zusätzlich auch die Kochzeit deutlich verkürzt, da sich nicht nur heiße Kochlauge zwischen den Fasern, sondern auch im Faserinneren (Lumen = Faserhohlraum: befindet.

Bei Einsatz von Rundholz (Schleifholz) zur Herstellung von Holzschliff ist ein möglichst hoher Feuchtigkeitsgehalt des Holzes entscheidend, um den Anteil von Splittern und Feinstoff gering zu halten. Bei diesem Verfahren werden die Holzstücke von bis zu 2 Metern Länge gegen einen großen, rauen Schleifstein mit hohem Druck gepresst und dadurch zerfasert und zerrieben. Je feuchter das Rundholz bei dieser Verarbeitung ist, umso elastischer, weicher und geschmeidiger ist der Faserverbund im gesamten Holzstück und jede seiner Einzelfasern und umso geringer der Anteil von Splittern und Feinstoff. Auch bei solchen Holzstücken kann durch den Einsatz einer erfindungsgemäßen Vorrichtung erhebliche Mengen an Energie und Zeit eingespart werden.

Es hat sich aber auch ergeben, dass, getrocknete Lebensmittel, wie zum Beispiel Pilze, Bohnen, Äpfel in getrockneter Form,schnell, kostengünstig und effizient befeuchtet werden können.

Durch die erfindungsgemäße Belüftungsleitung ist es möglich, den Wechsel zwischen Unterdruck und Umgebungsdruck beziehungsweise einem Überdruck schneller zu vollziehen und dadurch die Effektivität der Befeuchtung weiter zu steigern.

Durch die erfindungsgemäß vorgesehene mindestens eine verschließbare Öffnung kann die Vorrichtung im Batch-Betrieb oder bei zwei oder mehr Öffnungen kontinuierlich betrieben werden, so dass auch durch diesen verbesserten Verfahrensablauf die Effektivität und die Durchsatzrate der erfindungsgemäßen Vorrichtung deutlich gesteigert wird.

Bei allen faserhaltigen Materialien, die benetzt werden sollen, kann gemäss vorliegender Erfindung die Benetzungsflüssigkeit in der flüssigen (Flüssigkeit) oder gasförmigen (Dampf) Form, oder in einer Kombination aus beiden benutzt werden. Die Benetzungsflüssigkeit kann Wasser, Lösungsmittel, eine Einzelchemikalie oder eine Chemikalienmischung sein. Ebenso kann die Benetzungsflüssigkeiten auch dampfförmig vorliegen.

Ebenso können alle diese Benetzungsflüssigkeiten bei Einsatz und Verwendung in vorliegender Erfindung eine Temperatur von sehr kalt bis zum Siedepunkt haben.
Die zum Einsatz kommenden Benetzungsmittel können färbenden, hydrophoben, hydrophilen, bleichenden, Harz und Lignin zersetzenden, imprägnierenden, konservierenden und/oder die Oberflächenspannung senkenden oder erhöhenden Charakter haben, anorganischer oder organischer Natur sein.

Es hat sich als besonders vorteilhaft erwiesen, wenn das Gehäuse eine verschließbare erste Öffnung zum Beladen und eine verschließbare zweite Öffnung zum Entladen des Gehäuses aufweist, weil dadurch die Effektivität und der Durchsatz von zu befeuchtendem Fasermaterial nochmals gesteigert werden kann.

Je nach bevorzugtem Einsatzzweck und örtlichen Gegebenheiten kann die mindestens eine Öffnung mit einer Tür, einer Klappe, einem Schieber, einem Ventil, einer Pfropfenschnecke einer Schleuse und/oder einem Siphonverschluss verschlossen werden.

Türen und Klappen eignen sich besonders zum Einbringen von großen zu befeuchtenden Fasermaterialstücken, wie beispielsweise einem Ballen gepressten Altpapiers, während ein Schieber oder ein Ventil besonders geeignet sind, wenn das Fasermaterial in kleinen Stücken vorliegt und kontinuierlich zugeführt werden soll. Vorteilhaft an Tür, Klappe, Schieber und Ventil ist, dass die Öffnung definiert geschlossen werden kann und dadurch stets kontrollierte und reproduzierbare Druckverhältnisse im Inneren des Gehäuses herrschen. Durch das druckdichte beziehungsweise gasdichte Abschließen der Öffnung wird die Druckwechselgeschwindigkeit beziehungsweise die Druckänderungsgeschwindigkeit erhöht, was sich positiv auf die Effektivität der Befeuchtung auswirkt.

Der Vorteil einer Pfropfenschnecke ist darin zu sehen, dass sie kontinuierlich oder getaktet Fasermaterial, welches schon mit der Flüssigkeit, wie beispielsweise Wasser oder Kochlauge versetzt ist, in das Gehäuse fördern kann und gleichzeitig einen luft- und dampfdichten Verschluss der Gehäuseöffnung bewirkt. Die Pfropfenschnecke eignet sich daher besonders für einen kontinuierlichen oder quasikontinuierlichen Betrieb der Anlage und kann beispielsweise mit einem Ventil oder einem Schieber gekoppelt werden.

Des Weiteren ist es möglich, die Öffnungen mit einem Siphonverschluss, der mit einer Sperrflüssigkeit gefüllt ist, zu verschließen. Dadurch ist es möglich, ohne bewegte Teile einen luft- und dampfdichten Abschluss der Öffnungen des Gehäuses zu bewirken. Gleichzeitig ist es möglich, durch diesen Siphonverschluss das Fasermaterial in das Gehäuse einzuführen und aus dem Gehäuse herauszubefördern. Weil dieser Siphonverschluss ein passives Verschlusselement ist, vereinfacht sich auch die Steuerung der erfindungsgemäßen Vorrichtung.

Um die von dem Fasermaterial aufgenommene und mit dem Fasermaterial aus dem Gehäuse transportierte Flüssigkeitsmenge ausgleichen zu können, ist in weiterer vorteilhafter Ausgestaltung der Erfindung eine Zuleitung für das Medium, mit dem das Fasermaterial befeuchtet wird, vorgesehen. In dieser Zuleitung ist weiter ein Regelventil vorgesehen, so dass die Menge des im Gehäuse befindlichen Mediums entsprechend einem vorgegebenen Sollwert geregelt werden kann.

Um das Befeuchten und das Eindringen der Flüssigkeit in die Holzchips beziehungsweise die Altpapierstapel weiter zu beschleunigen, kann eine Druckleitung mit einem zweiten Wegeventil vorgesehen sein. Dadurch ist es möglich, nicht nur eine Druckabsenkung vorzunehmen, sondern im Wechsel mit dieser Druckabsenkung auch noch eine Druckerhöhung innerhalb des Gehäuses vorzunehmen. Durch die Vergrößerung der Amplitude zwischen dem Druckmaximum und dem Druckminimum wird die Befeuchtung und das Eindringen der Flüssigkeit in das zu befeuchtende Fasermaterial weiter intensiviert.

Die Druckleitung steht vorteilhafterweise mit einem Drucklufterzeuger und/oder einem Druckbehälter in Verbindung. Dadurch ist es möglich, den Überdruck rasch aufzubauen und gleichzeitig kann, wenn ein Druckbehälter eingesetzt wird, der Drucklufterzeuger kleiner ausgeführt werden und kontinuierlich laufen.

Entsprechend gilt für die Vakuumleitung, die mit einem Vakuumerzeuger und/oder einem Vakuumbehälter in Verbindung steht.

Um das Fasermaterial in die Vorrichtung und aus der Vorrichtung vollautomatisch herauszufördern, ist eine Fördereinrichtung vorgesehen, die bevorzugt als Förderschnecke, Transportband und/oder als Kettenförderer ausgebildet ist. Die Fördereinrichtung kann aber auch entfallen, wenn die Vorrichtung ausreichend schräg gestellt wird.

Entsprechend der erforderlichen Leistung und den Platzverhältnissen ist es möglich, ein oder mehrere Gehäuse parallel und/oder seriell zueinander geschaltet aufzustellen. Dadurch kann die Leistungsfähigkeit der Vorrichtung ausgehen von Standardmodulen in weiten Grenzen an die Erfordernisse des Einzelfalls angepasst werden.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen offenbarten Merkmale können sowohl einzeln als auch in beliebiger Kombination miteinander erfindungswesentlich sein.

Es zeigen:
- Figur 1: ein Schaltbild eines ersten Ausführungsbeispiels einer erfindungsgemäßen Vorrichtung,
- Figur 2: Schaltbilder weiterer Ausführungsbeispiele erfindungsgemäßer Vorrichtungen und
- Figur 3: ein Ausführungsbeispiel einer erfindungsgemäßen Vorrichtung, welche die Funktionen eines Pulpers und einer erfindungsgemäßen Vorrichtung zur Befeuchtung von Fasermaterial vereinigt.

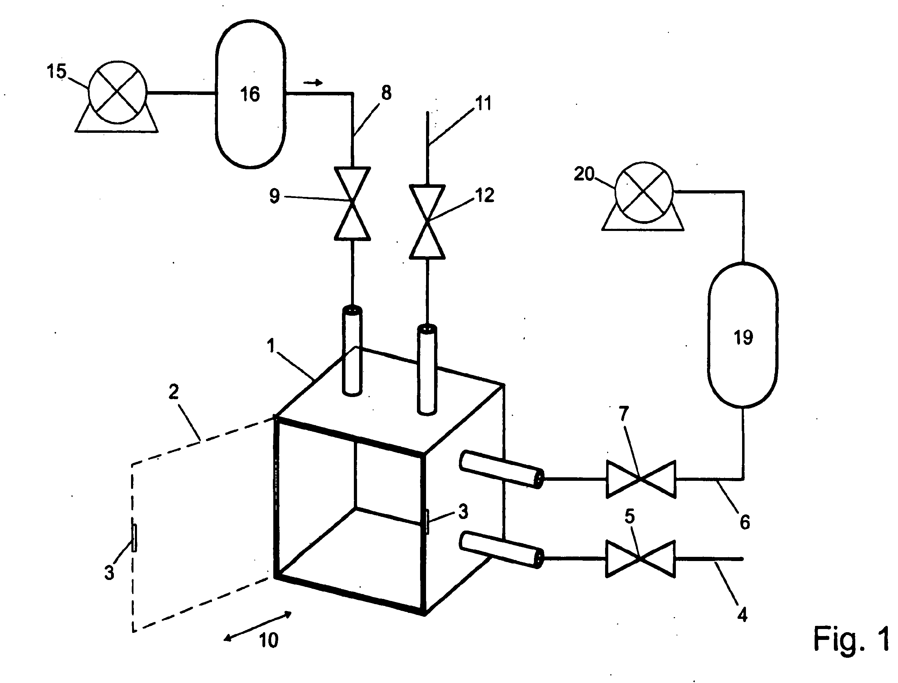

In dem in Figur 1 dargestellten Ausführungsbeispiel ist ein Gehäuse mit dem Bezugszeichen 1 versehen. Das dargestellte Gehäuse 1-hat eine quaderförmige Geometrie. Eine Seitenwand des Gehäuses 1 ist als Tür 2 ausgebildet und kann mit Hilfe eines Verschlusses 3 luft- und dampfdicht verschlossen werden.

In der Figur 1 ist die erfindungsgemäße Vorrichtung zur Benetzung schematisch und stark vereinfacht dargestellt. Die konstruktiven Details sind aus dieser Darstellung nicht ersichtlich, liegen jedoch im handwerklichen Können eines Fachmanns.

Zum Beladen des Gehäuses 1 wird die Tür 2 geöffnet und es können beispielsweise Holzchips oder ein nicht dargestellter Ballen mit Altpapier in das Gehäuse 1 transportiert werden. Anschließend wird die Tür 2 geschlossen und verriegelt, so dass das Gehäuseinnere luft- und dampfdicht von der Umgebung abgedichtet ist.

Der Weg über den der nicht dargestellte Papierballen in die Vorrichtung be- und entladen werden kann, ist durch einen Doppelpfeil 10 angedeutet.

Selbstverständlich ist es vorteilhaft, wenn das Gehäuseinnere mit einem Hubwagen oder einem anderen Transportgerät befahren werden kann, so dass ein oder mehrere Ballen Altpapier, die sich beispielsweise auf einer Europalette befinden, mit Hilfe eines Hubwagens einfach und rasch ins Gehäuseinnere gebracht werden können.

In das Gehäuse 1 münden verschiedene Leitungen mit deren Hilfe die Befeuchtung der Holzchips oder des Altpapiers (nicht dargestellt) erfolgen kann.

Mit dem Bezugszeichen 4 ist eine Zuleitung bezeichnet. In der Zuleitung befindet sich ein Regelventil 5.

Durch die Zuleitung kann entsprechend dem Bedarf die Flüssigkeit, mit der das Fasermaterial befeuchtet werden soll in flüssiger und/oder dampfförmiger Form ins Innere des Gehäuses 1 eingebracht werden. In aller Regel wird Wasser zur Befeuchtung eingesetzt. Es ist aber auch möglich, das Wasser mit verschiedenen Zusätzen zu versehen oder eine andere Flüssigkeit, wie zum Beispiel Kochlauge, einzusetzen.

Es versteht sich von selbst, dass sich stromaufwärts des Regelventils eine nicht dargestellte Fördereinrichtung, wie beispielsweise eine Pumpe, und/oder ein Vorratstank befindet.

Mit dem Bezugszeichen 6 ist eine Vakuumleitung bezeichnet. Diese Vakuumleitung 6 weist ein erstes Wegeventil 7, auf welches üblicherweise als schaltbares 2/2-Wegeventil ausgebildet ist, einen Vakuumbehälter 19 und einen Vakuumerzeuger 20 auf. Der Vakuumbehälter 19 ist nur optional. Wenn ein solcher Vakuumbehälter 19 vorhanden ist, kann der Vakuumerzeuger 20 relativ klein dimensioniert werden und kontinuierlich Luft beziehungsweise Dampf aus dem Behälter 19 saugen. Wenn dann das Wegeventil 7 geöffnet wird, kann im Innenraum des Gehäuses 1 sehr schnell und effektiv eine Druckabsenkung vorgenommen werden, obwohl der Vakuumerzeuger 20 relativ klein dimensioniert ist. Es versteht sich von selbst, dass das Volumen des Vakuumbehälters 19 und das Volumen des Gehäuses 1 ebenso wie die Leistung des Vakuumerzeugers 20 aufeinander abgestimmt werden müssen.

Mit dem Bezugszeichen 8 ist eine Druckleitung gekennzeichnet, in die ein zweites 2/2-Wegeventil 9 integriert ist.

Diese Druckleitung 8 ist mit einem Verdichter 15 und einem Druckbehälter 16 verbunden. Auch hier dient der Druckbehälter 16 dazu, die Laufzeit des Verdichters 15 zu erhöhen und gleichzeitig die erforderliche Leistung des Verdichters 15 zu verringern.

Die Druckleitung 8 ist nur dann erforderlich, wenn nach dem Absenken des Drucks im Innenraum des Gehäuses 1 ein Überdruck erzeugt werden soll.

Optional kann über die Druckleitung 8 Luft, Dampf oder eine Flüssigkeit in das Gehäuse 1 geleitet werden.

Mit dem Bezugszeichen 11 ist eine Belüftungsleitung bezeichnet. In dieser Belüftungsleitung 11 ist ein drittes Wegeventil 12 vorgesehen.

Die erfindungsgemäße Vorrichtung arbeitet wie folgt:
Bei geöffneter Tür 2 wird das zu befeuchtende Fasermaterial in das Gehäuse 1 befördert. Anschließend wird die Tür 2 luft- und dampfdicht verschlossen.

Das erste Wegeventil 7, das zweite Wegeventil 9 und das dritte Wegeventil 12 sind zunächst geschlossen. Durch die Zuleitung 4 wird bei mindestens teilweise geöffnetem Regelventil 5 das zur Befeuchtung des Papiers des im Gehäuse 1 befindlichen Papiers (nicht dargestellt) erforderliche Medium in dampfförmigem und/oder flüssigem Zustand ins Innere des Gehäuses 1 befördert.

Anschließend wird das Regelventil 5 geschlossen und das erste Wegeventil 7 rasch geöffnet. Dadurch wird das Innere des Gehäuses 1 mit dem Vakuumbehälter 19 verbunden und es findet ein Druckausgleich zwischen den beiden Behältern statt. Infolgedessen sinkt der Druck im Inneren des Gehäuses 1 schlagartig auf Werte zwischen 0,9 bar und 0,1 bar, bevorzugt auf Werte zwischen 0,7 bar und 0,3 bar, ab.

Sobald der gewünschte Unterdruck im Gehäuse 1 erreicht wurde, wird das erste Wegeventil 7 geschlossen und unmittelbar danach das dritte Wegeventil 12 geöffnet, so dass ein Druckausgleich zwischen der Umgebung und dem Inneren des Gehäuses stattfinden kann. Der "schlagartige" Ausgleich ist hierbei von besonderer Bedeutung. Er muss so schnell erfolgen, wie sich auch die durch Vakuum zusammengefallenen Fasern und Hohlräume wieder in ihre Ursprungsform zurückbilden wollen.

Falls gewünscht, kann nach wenigen Sekunden das dritte Wegeventil 12 wieder geschlossen werden und das zweite Wegeventil 9 geöffnet werden. Zwischen dem Schließen des dritten Wegeventils 12 und dem Öffnen des zweiten Wegeventils 9 können einige Sekunden oder auch nur weniger als eine Sekunde Zeit vergehen. Da die Druckleitung 8 mit dem Druckbehälter 16 verbunden ist, findet unmittelbar nach dem Öffnen des zweiten Wegeventils 9 ein Druckausgleich zwischen dem Druckbehälter 16 und dem Inneren des Gehäuses 1 statt. Infolgedessen steigt der Druck im Inneren des Gehäuses auf Werte oberhalb des Umgebungsdrucks. Bevorzugt sind Überdrücke zwischen 0,1 bar und 1 bar.

Wenn der gewünschte Überdruck im Inneren des Gehäuses 1 erreicht wurde, wird das zweite Wegeventil 9 geschlossen und dieser Überdruck über mehrere Sekunden, beispielsweise 5 Sekunden, bevorzugt jedoch weniger als zwei Sekunden aufrechterhalten. Nun beginnt der Zyklus von vorne. Damit der Überdruck nicht durch den Vakuumerzeuger 20 abgebaut werden muss, kann zuvor kurz das dritte Wegeventil 12 geöffnet werden, so dass sich der Überdruck über die Belüftungsdruckausgleichsleitung 11 abbaut.

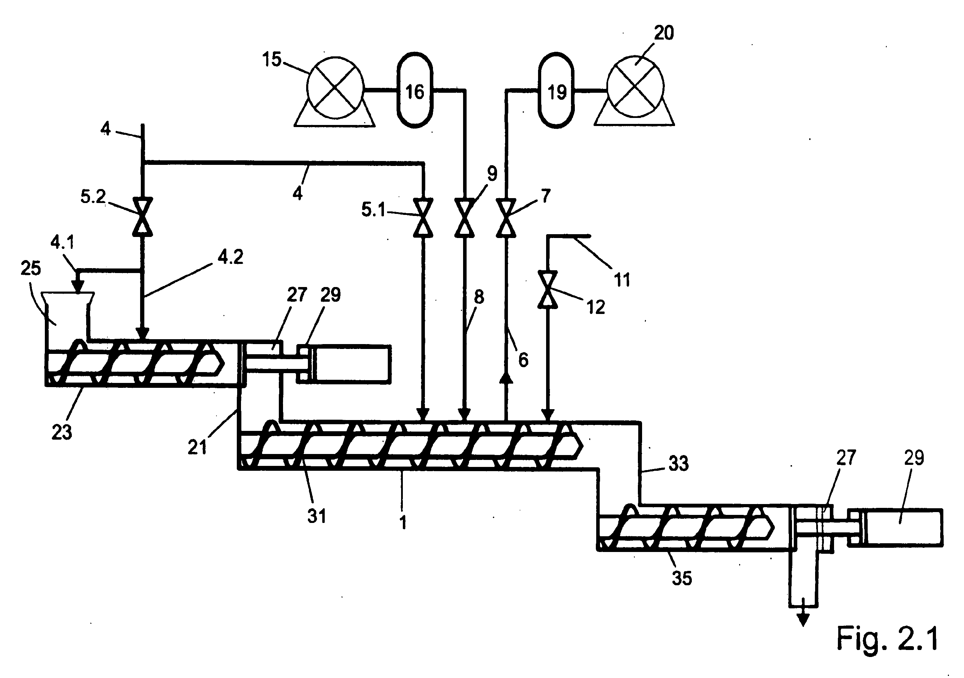

Die Figur 2.1 zeigt ein zweites Ausführungsbeispiel einer erfindungsgemäßen Vorrichtung, die bevorzugt kontinuierlich betrieben wird, aber auch batchweise benutzt werden kann.

Das Gehäuse 1 ist als zylindrisches Rohr ausgebildet.

An dem in Figur 2.1 linken Ende des Gehäuses 1 ist eine erste Öffnung 21 vorgesehen. Dieser ersten Öffnung 21 ist eine erste Pfropfenschnecke 23 und ein Einfülltrichter 25 vorgelagert. Zwischen der ersten Öffnung 21 und der Pfropfenschnecke 23 ist ein Ventil 27 angeordnet, welches über einen Aktor 29, beispielsweise in Form eines Pneumatikzylinders, betätigt werden kann. In Figur 2.1 ist das erste Schließventil 27 in der Schließstellung dargestellt. Gestrichelt ist die Stellung des geöffneten Ventils 27 dargestellt.

Wie aus Figur 2.1 ersichtlich, ist die Zuleitung 4 so verzweigt, dass ein Zweig der Zuleitung 4 über das Regelventil 5.1 direkt im Gehäuse 1 mündet, während weitere Zweige 4.1 und 4.2 in den Einfülltrichter 25 beziehungsweise die Pfropfenschnecke 23 münden.

Stromaufwärts der Zweige 4.1 und 4.2 ist ein zweites Regelventil 5.2 vorgesehen, welches ebenfalls zur Steuerung der in die erfindungsgemäße Vorrichtung strömenden Flüssigkeitsmenge dient.

Die Pfropfenschnecke 23 ist ähnlich aufgebaut wie eine konventionelle Förderschnecke. Der wesentliche Unterschied besteht darin, dass die Steigung der Förderschnecke in Förderrichtung abnimmt, so dass zusätzlich zu der Förderbewegung noch eine Verdichtung des geförderten Materials vorgenommen wird. Die Pfropfenschnecke kann aber auch zusätzlich noch konisch zulaufend sein.

In den Einfülltrichter 25 wird das befeuchtende Fasermaterial, bevorzugt in Form von Holzchips, zusammen mit zum Beispiel Wasser gegeben und anschließend von der ersten Pfropfenschnecke 23 in Richtung des Gehäuses 1 gefördert. Gleichzeitig mit der Förderbewegung findet eine Verdichtung der geförderten Holzchips statt, so dass sich ein druckdichter Pfropfen in der ersten Pfropfenschnecke 23 bildet. Dadurch wird eine Abdichtung des Gehäuseinneren von der Umgebung erreicht. In aller Regel ist die Abdichtung der Öffnung 21 durch die Propfenschnecke 23 bzw. die von ihr verdichteten Holzchips ausreichend. Allerdings kann, wie in Figur 2.1 dargestellt, zusätzlich noch das Schließventil 27 vorgesehen sein.

Wenn die erste Pfropfenschnecke 23 die Holzchips und das Wasser durch die erste Öffnung 21 in das Gehäuse gefördert hat, wird diese Mischung aus Holzchips und Wasser von einer Förderschnecke 31, die im Inneren des Gehäuses 1 angeordnet ist, langsam durch das Gehäuse 1 gefördert. Während das Material durch das Gehäuse 1 gefördert wird, finden die im Zusammenhang mit dem Ausführungsbeispiel gemäß Figur 1 beschriebenen Druckwechsel statt. Dadurch werden die Holzchips befeuchtet. Nachdem die Holzchips von der Förderschnecke 31 durch das Gehäuse 1 gefördert wurden, fallen sie durch die zweite Öffnung 33 in eine zweite Pfropfenschnecke 35. Am Ende der zweiten Pfropfenschnecke 35 sind ebenfalls ein Schließventil 27 und ein das Schließventil 27 betätigender Aktuator 29 angeordnet. Dadurch ist es möglich, auch die zweite Öffnung 33 des Gehäuses jederzeit druck- und dampfdicht abzuschließen. Durch geeignete Schrägstellung des Gehäuses 1 kann die Förderschnecke 31 auch entfallen.

Wenn das Schließventil 27 am Ende der zweiten Pfropfenschnecke 35 geöffnet wird, bzw. wenn der Druck der Pfropfenschnecke 35 größer ist als der Druck des Aktuators 29 können die befeuchteten Holzchips sowie eventuell vorhandenes überschüssiges Wasser nach unten aus der erfindungsgemäßen Vorrichtung herausfallen.

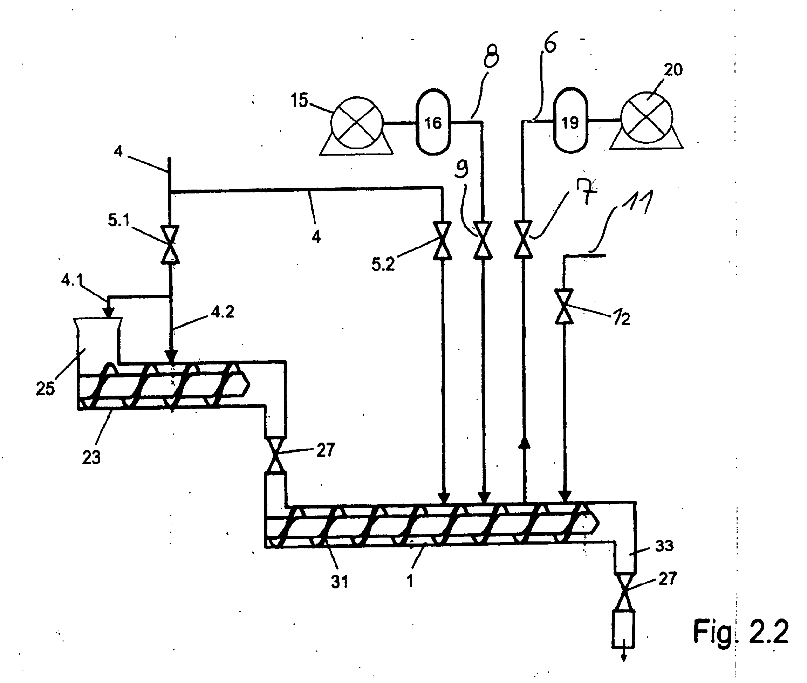

Das anhand der Figur 2 beschriebene Ausführungsbeispiel einer erfindungsgemäßen Vorrichtung kann wahlweise kontinuierlich oder batchweise betrieben werden, da jederzeit Holzchips von der ersten Pfropfenschnecke 23 in das Gehäuse 1 gefördert und die befeuchteten Holzchips mit Hilfe der zweiten Pfropfenschnecke 35 aus dem Gehäuse 1 herausgefördert werden können.
Es ist auch möglich, die zweite Pfropfenschnecke 35 entfallen zu lassen und die zweite Öffnung 33 ausschließlich durch das Schließventil 27 zu verschließen. Eine solche Ausführungsform ist in Figur 2.2 dargestellt.

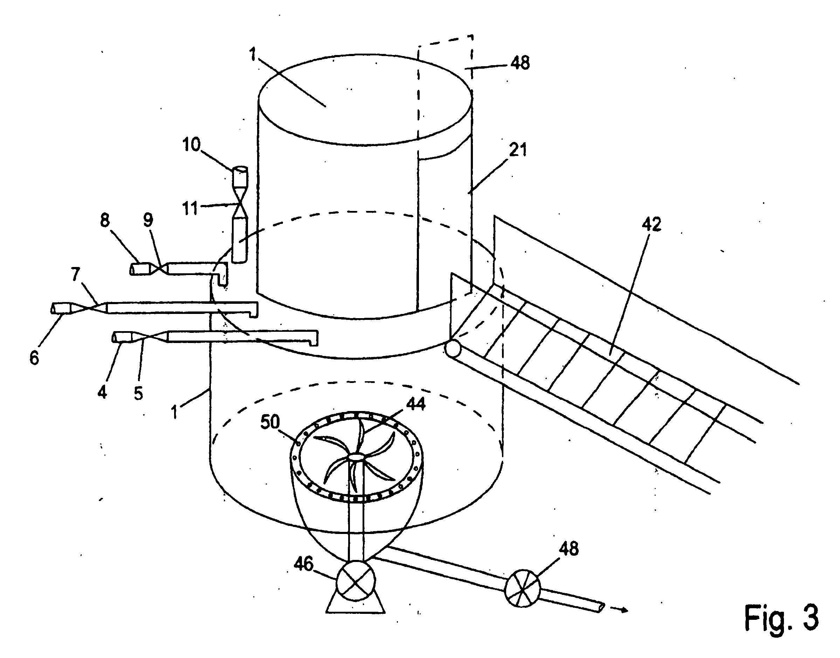

Fig. 3 stellt ein weiteres Ausführungsbeispiel einer erfindungsgemäßen Vorrichtung zur Benetzung von faserigem Material dar, die besonders zur Benetzung von einzelnen oder mehreren Altpapier- oder Zellstoffballen, Papier in Bogen sowie gespaltenen Papierrollen geeignet ist.

Diese Vorrichtung kann durch Umbau eines herkömmlichen Pulpers hergestellt werden und ist auch zur Nachrüstung solcher Pulper geeignet. Der Pulper, sowie die oben aufmontierte Haube müssen den der Erfindung vorliegenden Druckverhältnissen angepasst bzw. ausgelegt sein.

Das Fasermaterial wird mittels einer Fördereinrichtung 42 durch die geöffnete Öffnung 21 in das Gehäuse 1 gegeben. Danach wird ein Schieber 48 heruntergefahren und dadurch die Öffnung 21 verschlossen.

Das Regelventil 5 der Zuleitung 4 wird geöffnet und Benetzungsflüssigkeit, insbesondere Wasser, bis zum gewünschten Niveau zugegeben. Ist das Niveau erreicht, wird das Regelventil 5 wieder geschlossen.

Anschließend wird ein Motor 46 eingeschaltet dadurch ein Rotor 44 in Drehung versetzt. Dadurch findet eine Durchmischung der in dem Gehäuse 1 befindlichen Altpapier- oder Zellstoffballen und der Benetzungsflüssigkeit statt.

Bezüglich der Leitungen 4, 6, und 8 wird auf das zu diesen Leitungen im Zusammenhand mit den vorangegangenen Ausführungsbeispielen verwiesen.

Nachdem das Fasermaterial befeuchtet wurde, wird eine Pumpe 48 eingeschaltet und das befeuchtete Fasermaterial über eine Lochplatte 50 abgepumpt. Danach beginnen die Beschickung und Befeuchtung des Pulpers von Neuem.

Da die vollständige Befeuchtung des Fasermaterials in sehr kurzer Zeit (<2 Minuten) erfolgt und sich vollständig befeuchtetes Fasermaterial sofort mit wenig Energieaufwand sehr gut zerkleinern lässt, kann über die Lochplatte 50 auch kontinuierlich abgepumpt werden. Nichtfaseriges Material (z. B. Folien, Drähte) können wie schon heute auch, durch eine große Ausschleus-Öffnung (nicht dargestellt) oder mittels Greifkran-Vorrichtung durch nicht dargestellte Öffnungen in der Pulperhaube periodisch entfernt werden.

Durch die gemäß dieser Vorrichtung sehr kurzen Benetzungszeiten und damit sehr kurzen Auflöse- und Verweilzeit des Altpapiers im Pulper, können die Papierfasern sehr schnell von Kunststoff-Folien oder anderen Beschichtungen angelöst und über die Lochplatte 50 abgepumpt werden. Diese Nichtfaser-Materialien können dadurch in deutlich größeren Stücken aus dem Pulper-Gehäuse 1 entfernt werden. Außerdem kann der heute übliche Nachsortier-Aufwand des Fasermaterials, das über die Lochplatte 50 abgepumpt wurde, dadurch sehr stark reduziert werden.

## Patentansprüche

1. Vorrichtung zur Befeuchtung von Fasermaterial im Wechseldruckverfahren mit einem luft- und dampfdichten Gehäuse (1), mit einer Vakuumleitung (6), wobei in der Vakuumleitung (6) ein erstes Wegeventil (7) vorgesehen ist, wobei das Gehäuse (1) mindestens eine verschließbare Öffnung (2, 21, 33) zum Be- und Entladen des Gehäuses (1) und eine Belüftungsleitung (11) aufweist, und wobei in der Belüftungsleitung (11) ein drittes Wegeventil (12) vorgesehen ist, **dadurch gekennzeichnet, dass** die Vakuumleitung (6) mit einem Vakuumbehälter (19) in Verbindung steht, und dass das erste Wegeventil (7) zwischen dem Gehäuse (1) und dem vakuurnbenälter (19) angeordnet ist.

2. Vorrichtung nach Anspruch 1, **dadurch gekennzeichnet, dass** das Gehäuse (1) eine verschließbare erste Öffnung (21) zum Beladen und eine verschließbare zweite Öffnung (33) zum Entladen des Gehäuses (1) aufweist.

3. Vorrichtung nach Anspruch 1 oder 2, **dadurch gekennzeichnet, dass** die mindestens eine Öffnung (2) mit einer Tür (2), einer Klappe, einem Schieber, einem Ventil (27), einer Pfropfenschnecke (23, 35), einer Schleuse und/oder einem Siphonverschluss (36) verschließbar ist.

4. Vorrichtung nach einem der vorhergehenden Ansprüche, **dadurch gekennzeichnet, dass** eine Zuleitung (4) für das Medium mit dem das Fasermaterial befeuchtet wird vorhanden ist, und dass in der Zuleitung (4) ein Regelventil (5) vorgesehen ist.

5. Vorrichtung nach einem der vorhergehenden Ansprüche, **dadurch gekennzeichnet, dass** eine Druckleitung (8) vorgesehen ist, und dass in der Druckleitung (8) ein zweites Wegeventil (9) vorgesehen ist.

6. Verrichtung nach Anspruch 5, **dadurch gekennzeichnet, dass** die Druckleitung (8) mit einem Druckbehälter (16) in Verbindung steht, und dass das zweite Wegeventil (9) zwischen Gehäuse (1) und Druckbehälter (16) angeordnet ist.

7. Vorrichtung nach Anspruch 5 oder 6, **dadurch gekennzeichnet, dass** die Druckleitung (8) mit einem Drucklufterzeuger (15) in Verbindung steht.

8. Vorrichtung nach einem der vorhergehenden Ansprüche, dadurch gekenntzeichnet, dass die Vakuumleitung (6) mit einem Vakuumerzeuger (20) in Verbindung steht.

9. Vorrichtung nach einem der vorhergehenden Ansprüche, **dadurch gekennzeichnet, dass** mindestens eine Fördereinrichtung zur Förderung des Fasermaterials durch die Vorrichtung (1) vorgesehen ist.

10. Vorrichtung nach Anspruch 9, **dadurch gekennzeichnet, dass** die mindestens eine Fördereinrichtung als Fördersennecke (31), Transportband (40) und/oder als Kettenförderer ausgebildet ist.

11. Vorrichtung nach einem der vorhergehenden Ansprüche, **dadurch gekennzeichnet, dass** ein oder mehrere Gehäuse (1) parallel und/oder seriell zueinander geschaltet sind.

## Claims

1. An apparatus for moistening fibrous material by the alternating pressure method, with an airtight and vapour tight housing (1) and with a vacuum line (6), a first directional valve (7) being provided in the vacuum line (6), wherein the housing (1) has at least one closable orifice (2, 21, 33) for loading and unloading the housing (1), and a ventilation line (11), and wherein a third directional valve (12) is provided in the ventilation line (11), **characterized in that** the vacuum line (6) is connected to a vacuum vessel (19), and **in that** the first directional valve (7) is arranged between the housing (1) and the vacuum vessel (19).

2. The apparatus as claimed in claim 1, **characterized in that** the housing (1) has a closable first orifice (21) for loading the housing (1) and a closable second orifice (33) for unloading the housing.

3. The apparatus as claimed in claim 1 or 2, **characterized in that** the at least one orifice (2) can be closed by means of a door (2), a flap, a slide, a valve (27), a plug screw (23, 35), a sluice and/or a drain trap (36).

4. The apparatus as claimed in one of the preceding claims, **characterized in that** a supply line (4) for the medium which the fibrous material is moistened with is provided, and **in that** a regulating valve (5) is provided in the supply line (4).

5. The apparatus as claimed in one of the preceding claims, **characterized in that** a pressure line (8) is provided, and **in that** a second directional valve (9) is provided in the pressure line (8).

6. The apparatus as claimed in claim 5, **characterized in that** the pressure line (8) is connected to a pressure vessel (16), and **in that** the second directional valve (9) is arranged between the housing (1) and the pressure vessel (16).

7. The apparatus as claimed in one of the preceding claims, **characterized in that** the pressure line (8) is connected to a compressed air generator (15).

8. The apparatus as claimed in one of claims 5 or 6, **characterized in that** the vacuum line (6) is connected to a vacuum generator (20).

9. The apparatus as claimed in one of the preceding claims, **characterized in that** at least one conveying device for conveying the fibrous material through the apparatus (1) is provided.

10. The apparatus as claimed in claim 9, **characterized in that** the at least one conveying device is designed as a conveyor worm (31), a transport belt (40) and/or a chain conveyor.

11. The apparatus as claimed in one of the preceding claims, **characterized in that** one or more housings (1) are connected in parallel and/or in series to one another.

## Revendications

1. Dispositif d'humidification de matériau fibreux par le procédé sous vide et pression alternés, comprenant un carter (1) étanche à l'air et à la vapeur, une conduite à vide (6), dans ladite conduite à vide (6) étant prévu un premier distributeur (7), ledit carter (1) présentant au moins une ouverture (2, 21, 33) refermable pour charger et décharger le carter (1) ainsi qu'une conduite d'aération (11), et dans ladite conduite d'aération (11) étant prévu un troisième distributeur (12), **caractérisé par le fait que** ladite conduite à vide (6) est en communication avec un réservoir à vide (19) et que ledit premier distributeur (7) est disposé entre ledit carter (1) et ledit réservoir à vide (19).

2. Dispositif selon la revendication 1, **caractérisé par le fait que** ledit carter (1) comprend une première ouverture refermable (21) pour charger et une deuxième ouverture refermable (33) pour décharger ledit carter (1).

3. Dispositif selon la revendication 1 ou 2, **caractérisé par le fait que** ladite au moins une ouverture (2) peut être fermée par une porte (2), un volet, un coulisseau, une vanne (27), une vis sans fin de formation de bouchon (23, 35), un sas et/ou un obturateur siphon (36).

4. Dispositif selon l'une quelconque des revendications précédentes, **caractérisé par le fait qu'**il existe une conduite d'alimentation (4) pour le milieu servant à humidifier le matériau fibreux et qu'une soupape de réglage (5) est prévue dans ladite conduite d'alimentation (4).

5. Dispositif selon l'une quelconque des revendications précédentes, **caractérisé par le fait qu'**une conduite de pression (8) est prévue et qu'un deuxième distributeur (9) est prévu dans ladite conduite de pression (8).

6. Dispositif selon la revendication 5, **caractérisé par le fait que** ladite conduite de pression (8) est en communication avec un réservoir à pression (16) et que ledit deuxième distributeur (9) est disposé entre le carter (1) et ledit réservoir à pression (16).

7. Dispositif selon la revendication 5 ou 6, **caractérisé par le fait que** la conduite de pression (8) est en communication avec un générateur d'air comprimé (15).

8. Dispositif selon l'une quelconque des revendications précédentes, **caractérisé par le fait que** ladite conduite à vide (6) est en communication avec un générateur de vide (20).

9. Dispositif selon l'une quelconque des revendications précédentes, **caractérisé par le fait que** l'on prévoit au moins un convoyeur pour transporter le matériau fibreux à travers le dispositif (1).

10. Dispositif selon la revendication 9, **caractérisé par le fait que** ledit au moins un convoyeur est réalisé en tant que vis transporteuse (31), bande transporteuse (40) et/ou comme convoyeur à chaînes.

11. Dispositif selon l'une quelconque des revendications précédentes, **caractérisé par le fait qu'**un ou plusieurs carters (1) sont montés en parallèle et/ou en série les uns par rapport aux autres.
